# EUROPÄISCHE PATENTSCHRIFT

(11) **EP 3 587 037 B1**
(45) Veröffentlichungstag und Bekanntmachung des Hinweises auf die Patenterteilung: **16.08.2023**
(21) Anmeldenummer: 18179212.8
(22) Anmeldetag: 22.06.2018
(51) Int. Cl.: B25F 5/00, A01D 34/08, A01D 34/30, A01D 34/90, A22B 5/16, B26B 25/00

(54) **WERKZEUGKOPF FÜR EIN HANDGEFÜHRTES ARBEITSGERÄT UND ARBEITSGERÄT MIT EINEM WERKZEUGKOPF**
TOOL HEAD FOR A HAND-HELD WORKING TOOL AND WORKING TOOL WITH A TOOL HEAD
TÊTE D'OUTIL POUR UN APPAREIL DE TRAVAIL PORTATIF ET APPAREIL DE TRAVAIL POURVU D'UNE TÊTE D'OUTIL

(43) Veröffentlichungstag der Anmeldung: 01.01.2020
(73) Patentinhaber: Andreas Stihl AG & Co. KG, 71336 Waiblingen (DE)
(72) Erfinder: GEROMILLER, Ludwig, 73642 Welzheim (DE)
(74) Vertreter: Reinhardt, Annette

(56) Entgegenhaltungen:
- EP-A2- 0 399 503
- US-A- 3 857 177
- US-A- 4 998 401

## Beschreibung

Die Erfindung betrifft einen Werkzeugkopf sowie ein Arbeitsgerät mit einem Werkzeugkopf.

Aus der US 4,998,401, die die Präambel des Hauptanspruches offenbart, ist ein handgeführtes Arbeitsgerät zum Mähen von Gras bekannt, das zwei hin- und herdrehende Messerscheiben als Werkzeuge aufweist. Die Messerscheiben sind über Koppelgetriebe angetrieben.

Auch die US 3,857,177 offenbart ein Arbeitsgerät zum Mähen von Gras, dessen Messerscheiben über Koppelgetriebe angetrieben sind. Die Koppelglieder der beiden Koppelgetriebe werden von einem gemeinsamen Antriebsglied angetrieben.

Bei derartigen Mähgeräten treten im Betrieb aufgrund der oszillierenden Bewegung der Messerscheiben und der hiermit verbundenen bewegten Massen der Koppelgetriebe hohe Schwingungen auf.

Der Erfindung liegt die Aufgabe zugrunde, einen Werkzeugkopf für ein handgeführtes Arbeitsgerät zu schaffen, bei dem die Schwingungsanregung im Betrieb verringert ist. Eine weitere Aufgabe der Erfindung liegt darin, ein handgeführtes Arbeitsgerät mit verringerter Schwingungsanregung im Betrieb anzugeben.

Diese Aufgabe wird bezüglich des Werkzeugkopfs mit verringerter Schwingungsanregung durch einen Werkzeugkopf mit den Merkmalen des Anspruchs 1 gelöst. Bezüglich des Arbeitsgeräts wird die Aufgabe durch ein Arbeitsgerät mit den Merkmalen des Anspruchs 12 gelöst.

Es hat sich gezeigt, dass die Schwingungsanregung im Betrieb erheblich verringert werden kann, wenn die zweite Gelenkachse, an der das erste Koppelglied mit dem ersten Werkzeug gekoppelt ist, und die vierte Gelenkachse, an der das zweite Koppelglied mit dem zweiten Werkzeug schwenkbar gekoppelt ist, auf gegenüberliegenden Seiten einer Mittelebene angeordnet sind, die von der Drehachse der Werkzeuge und der Koppeltriebachse aufgespannt ist. Die Mittelebene verläuft demnach erfindungsgemäß zwischen der zweiten Gelenkachse und der vierten Gelenkachse. Es hat sich gezeigt, dass aufgrund der Anordnung der Mittelebene zwischen der zweiten Gelenkachse und der vierten Gelenkachse die Getriebekräfte, insbesondere die Getriebekräfte der zweiten Getriebeordnung sich mindestens teilweise, insbesondere vollständig ausgleichen. Dadurch können die entstehenden Schwingungen im Betrieb deutlich verringert werden.

In besonders vorteilhafter Gestaltung verläuft die Mittelebene mittig zwischen der zweiten Gelenkachse und der vierten Gelenkachse. Auch eine Anordnung, bei der die Mittelebene nicht mittig zwischen der zweiten und der vierten Gelenkachse angeordnet ist, kann jedoch vorteilhaft sein.

Das erste Koppelglied ist mit dem ersten Werkzeug um eine zweite Gelenkachse schwenkbar gekoppelt. Das erste Koppelglied muss dabei nicht unmittelbar mit dem ersten Werkzeug verbunden sein, sondern kann mittelbar, beispielsweise über einen mit dem ersten Werkzeug drehfest verbundenen Arm, an der zweiten Gelenkachse mit dem ersten Werkzeug verbunden sein. Entsprechend kann das zweite Koppelglied mit dem zweiten Werkzeug um die vierte Gelenkachse unmittelbar oder mittelbar, beispielsweise über einen drehfest mit dem Werkzeug verbundenen Arm, schwenkbar gekoppelt sein. Eine deutliche Verringerung der Getriebekräfte lässt sich insbesondere dann erreichen, wenn die zweite Gelenkachse und die vierte Gelenkachse symmetrisch zur Mittelebene angeordnet sind.

Das erste Antriebsglied weist eine erste Antriebsgliedachse auf, die die Koppeltriebachse mit der ersten Gelenkachse verbindet. Das zweite Antriebsglied weist eine zweite Antriebsgliedachse auf, die die Koppeltriebachse mit der dritten Gelenkachse verbindet. Die erste Antriebsgliedachse und die zweite Antriebsgliedachse schließen in einer Blickrichtung in Richtung der Koppeltriebachse einen Winkel ein, der vorteilhaft kleiner als 180°, insbesondere kleiner als 140°, vorzugsweise kleiner als 100°, besonders bevorzugt kleiner als 90° ist. Der Winkel beträgt vorteilhaft mindestens 10°.

Das erste Koppelglied weist vorteilhaft eine erste Koppelgliedachse auf, die die erste Gelenkachse mit der zweiten Gelenkachse verbindet, und das zweite Koppelglied weist eine zweite Koppelgliedachse auf, die die dritte Gelenkachse mit der vierten Gelenkachse verbindet. Die beiden Koppelgetriebe sind vorteilhaft so angeordnet, dass bei Blickrichtung in Richtung der Koppeltriebachse ein erster Antriebswinkel zwischen der ersten Antriebsgliedachse und der ersten Koppelgliedachse und ein zweiter Antriebswinkel zwischen der zweiten Antriebsgliedachse und der zweiten Koppelgliedachse für jede Stellung der Koppelgetriebe gleich sind. Dadurch wird ein weitgehender Massenausgleich im Betrieb erreicht.

Die Antriebsgliedachsen und die Koppelgliedachsen sind gedachte gerade Verbindungslinien, die die geometrische Anordnung der Gelenke der Koppelgetriebe angeben. Die Antriebsglieder und Koppelglieder können entlang der jeweiligen Antriebsgliedachsen bzw. Koppelgliedachsen verlaufen oder einen hiervon abweichenden Verlauf aufweisen.

Vorteilhaft sind das erste Koppelgetriebe und das zweite Koppelgetriebe so ausgebildet, dass das erste Koppelglied und das zweite Koppelglied im Betrieb um die erste Gelenkachse bzw. die dritte Gelenkachse nicht rotieren, sondern um die erste Gelenkachse bzw. um die dritte Gelenkachse hin- und herschwingen.

Vorteilhaft weist der Werkzeugkopf ein Getriebe mit einem Antriebsritzel und einem Tellerrad auf. Das Tellerrad ist vorteilhaft drehfest mit den Antriebsgliedern der Koppelgetriebe verbunden. Der Radius des Tellerrads beträgt vorteilhaft mindestens das 3,5fache, insbesondere mindestens das 5fache des Abstands der ersten Gelenkachse zur Koppeltriebachse. Der Radius des Tellerrads beträgt vorteilhaft mindestens das 3,5fache, insbesondere mindestens das 5fache des Abstands der dritten Gelenkachse zur Koppeltriebachse. Dadurch, dass das Tellerrad vergleichsweise groß ist, wirkt das Tellerrad als Schwungrad. Dadurch wird eine gleichförmige, kraftvolle Bewegung der Werkzeuge erreicht.

Vorteilhaft ist mindestens ein Abschnitt des Tellerrads zwischen den Antriebsgliedern und den Werkzeugen angeordnet. Die Antriebsglieder befinden sich demnach auf der einen Seite des Tellerrads und die Werkzeuge auf der anderen, gegenüberliegenden Seite des Tellerrads. Zumindest ein Abschnitt des Tellerrads ist in dem Bauraum angeordnet, der sich bezogen auf die Richtung der Drehachse der Werkzeuge zwischen den Antriebsgliedern und den Werkzeugen befindet. Dadurch ergibt sich ein kompakter Aufbau. Bevorzugt kämmt das Antriebsritzel mit dem Tellerrad. Weitere Getriebestufen zwischen Antriebsritzel und Tellerrad sind demnach vorteilhaft nicht vorgesehen. Das Antriebsritzel ist dabei das Eingangsritzel des Getriebes. Das Antriebsritzel weist bevorzugt eine Anschlusskontur zur drehfesten Verbindung mit einer Antriebswelle des Arbeitsgeräts auf. Das Antriebsritzel ist demnach zur drehfesten Verbindung mit der Antriebswelle ohne Zwischenschaltung weiterer Getriebestufen vorgesehen. Insbesondere bei vergleichsweise großem Tellerrad kann bereits mit einer Getriebestufe eine ausreichend große Untersetzung der Drehzahl erreicht werden.

Vorteilhaft ist mindestens ein Koppelglied über ein Abtriebsglied mit dem zugeordneten Werkzeug gekoppelt, wobei das Abtriebsglied drehfest mit dem zugeordneten Werkzeug verbunden ist. Dadurch, dass das Koppelglied nicht unmittelbar mit dem zugeordneten Werkzeug verbunden ist, sondern über ein Abtriebsglied, ist eine vorteilhafte Anordnung der Komponenten möglich. Mindestens ein Abtriebsglied ist dabei vorteilhaft um weniger als 360° um die Drehachse der Werkzeuge schwenkbar. Die Abtriebsglieder führen im Betrieb keine umlaufende, rotierende Bewegung, sondern eine hin- und herschwenkende Bewegung aus. Die Verbindung der zweiten Gelenkachse mit der Drehachse und die Verbindung der vierten Gelenkachse mit der Drehachse schließen in den Endlagen der Koppelgetriebe bevorzugt einen Winkel ein, der 10° bis 180°, insbesondere 70° bis 140° beträgt.

Vorteilhaft ist vorgesehen, dass das erste Werkzeug an einer Hülse fixiert ist und das zweite Werkzeug an einer Welle fixiert ist, die durch die Hülse ragt. Dadurch wird ein kompakter Aufbau erreicht.

Vorteilhaft wird bei jeder Hubbewegung mehr als ein Schnitt ausgeführt. Die Antriebsglieder sind vorteilhaft umlaufend angetrieben. Pro Umdrehung der Antriebsglieder werden vorteilhaft mehr als zwei, insbesondere mehr als drei, bevorzugt vier Schnittereignisse ausgeführt. Vorteilhaft besitzt mindestens ein Werkzeug mindestens eine Schneidkante, die bei jeder Bewegung in einer Richtung zwei Gegenkanten des anderen Werkzeugs überstreicht. Die Gegenkanten können dabei Gegenhalter sein. In bevorzugter Gestaltung sind auch die Gegenkanten jedoch als Schneidkanten ausgeführt. Dadurch, dass die mindestens eine Schneidkante zwei Gegenkanten des anderen Werkzeugs überstreicht, werden bei jeder Bewegung in einer Richtung zwei Schnitte ausgeführt. Vorteilhaft ist für jede Drehrichtung mindestens eine Schneidkante vorgesehen. Vorteilhaft überstreicht mindestens eine Schneidkante für eine erste Drehrichtung des Werkzeugs zwei Gegenkanten des anderen Werkzeugs bei der Bewegung in der ersten Drehrichtung, und mindestens eine weitere Schneidkante für eine zweite Drehrichtung des Werkzeugs überstreicht zwei weitere Gegenkanten des anderen Werkzeugs bei der Bewegung in der zweiten Drehrichtung. Dadurch ergeben sich vier Schnitte je Umdrehung der Antriebsglieder. Die beiden Schnitte in einer Richtung werden dabei bevorzugt mit unterschiedlichen Schnittgeschwindigkeiten ausgeführt. Dadurch wird ein sehr gutes Schnittergebnis erreicht. Es kann jedoch auch vorgesehen sein, dass bei jeder Hubbewegung nur ein Schnitt ausgeführt wird.

Für ein Arbeitsgerät ist vorgesehen, dass das Arbeitsgerät einen Antriebsmotor, eine Antriebswelle und einen Werkzeugkopf aufweist. Die Antriebswelle ist mit einem Antriebsritzel des Werkzeugkopfs vorteilhaft drehfest verbunden. Zusätzliche Getriebestufen zwischen Antriebswelle und Antriebsritzel sind demnach nicht vorgesehen. Die Antriebswelle ist vorteilhaft zumindest in einem Arbeitsdrehzahlbereich drehfest mit einer Motorabtriebswelle des Antriebsmotors verbunden. Es kann vorgesehen sein, dass die Motorabtriebswelle und die Antriebswelle drehfest miteinander verbunden sind oder als eine einzige Welle ausgebildet sind. In alternativer bevorzugter Gestaltung ist zwischen der Motorabtriebswelle und der Antriebswelle eine Kupplung, bevorzugt eine Fliehkraftkupplung angeordnet. Vorteilhaft stellt die Kupplung bei Überschreiten einer konstruktiv vorgegebenen Drehzahl eine drehfeste Verbindung zwischen Motorabtriebswelle und Antriebswelle her.

Die Drehzahl der Motorabtriebswelle des Antriebsmotors und die Drehzahl des Antriebsritzels sind bei angetriebenen Werkzeugen vorteilhaft gleich. Die Drehzahl des Antriebsritzels im Betrieb beträgt vorteilhaft mindestens 5.000 Umdrehungen pro Minute. In bevorzugter Gestaltung wird das Antriebsritzel im Betrieb mit einer Drehzahl von mindestens 8.000 Umdrehungen pro Minute angetrieben. Dadurch, dass der Schneidkopf zum Antrieb mit sehr hoher Drehzahl ausgelegt ist, kann der Werkzeugkopf flexibel an unterschiedlichen Geräten eingesetzt werden, und der Antriebsmotor kann ein Elektromotor oder ein Verbrennungsmotor sein, ohne dass zwischen dem Antriebsmotor und dem Antriebsritzel ein Getriebe benötigt wird. Es kann jedoch auch vorgesehen sein, dass im Motorgehäuse ein Getriebe angeordnet ist.

Für einen Werkzeugkopf für ein handgeführtes Arbeitsgerät mit mindestens einem drehbar gelagerten Werkzeug, wobei das Werkzeug um eine Drehachse hin- und herdrehend antreibbar ist, wobei das Werkzeug eine Schneidebene aufweist, ist vorgesehen, dass der Werkzeugkopf ein Standfußbauteil aufweist, wobei das Standfußbauteil eine Umfangswand aufweist, die durch die Schneidebene ragt, wobei die Umfangswand in Umfangsrichtung von einer ersten Stirnseite und einer zweiten Stirnseite begrenzt ist, wobei die Stirnseiten in der Schneidebene einen Winkel von weniger als 60° um die Drehachse einschließen, und wobei die Umfangswand zwischen der ersten Stirnseite und der zweiten Stirnseite mindestens eine Aussparung aufweist, wobei die Aussparung sich in die Schneidebene erstreckt und zwei Abschnitte der Umfangswand voneinander trennt.

Die beiden Abschnitte bilden zwei definierte Auflagepunkte zum Abstellen des Arbeitsgeräts auf dem Boden. Die Auflagepunkte sind insbesondere flächig als Auflageflächen ausgebildet. Die Auflageflächen schließen vorteilhaft einen Winkel von 20° bis 40 ° mit der Schneidebene ein. Die Auflageflächen liegen insbesondere in einer gemeinsamen Auflageebene. Die Auflageebene verläuft vorteilhaft parallel zu einem am Werkzeugkopf montierten Führungsrohr. Dadurch wird eine stabile, definierte Auflage zum Abstellen des Arbeitsgeräts geschaffen. Durch die Aussparung ist das mindestens eine Werkzeug für den Bediener auch von einer Position in Verlängerung des Führungsrohrs aus gut sichtbar, so dass die Umfangswand des Standfußbauteils die Ausführung exakter Schnitte mit dem Arbeitsgerät nicht beeinträchtigt.

Vorteilhaft ist der Winkel, über den sich die Aussparung in der Schneidebene um die Drehachse erstreckt größer als der Winkel, über den sich ein Abschnitt der Umfangswand, insbesondere beide voneinander getrennten Abschnitte der Umfangswand in der Schneidebene jeweils um die Drehachse erstrecken. Bei einer Umfangswand mit genau zwei Abschnitten, die von einer Aussparung getrennt sind, erstreckt sich die Aussparung damit über mehr als ein Drittel der Umfangswand in der Schneidebene. Dadurch, dass die Aussparung vergleichsweise groß ist, hat der Bediener durch die Aussparung eine gute Sicht auf das mindestens eine Werkzeug.

Ein Ausführungsbeispiel der Erfindung wird im Folgenden anhand der Zeichnung erläutert. Es zeigen:
- Fig. 1: eine schematische Darstellung eines handgeführten Arbeitsgeräts,
- Fig. 2: den Werkzeugkopf des Arbeitsgeräts aus Fig. 1 in perspektivischer Darstellung,
- Fig. 3: eine Schnittdarstellung des Werkzeugkopfs aus Fig. 2,
- Fig. 4: einen Schnitt entlang der Linie IV-IV in Fig. 3,
- Fig. 5: eine Explosionsdarstellung des Werkzeugkopfs,
- Fig. 6: einen Schnitt entlang der Linie VI-VI in Fig. 3,
- Fig. 7: eine perspektivische Darstellung eines Exzenterbauteils des Werkzeugkopfs,
- Fig. 8: eine teilgeschnittene Ansicht des Exzenterbauteils aus Fig. 7,
- Fig. 9: eine Seitenansicht des Exzenterbauteils in Richtung des Pfeils IX in Fig. 8,
- Fig. 10: eine Seitenansicht des Exzenterbauteils in Richtung des Pfeils X in Fig. 8,
- Fig. 11: eine ausschnittsweise Schnittdarstellung des Werkzeugkopfs mit den Koppelgetrieben in einer ersten Totpunktlage,
- Fig. 11a: eine schematische Darstellung des ersten Koppelgetriebes in der in Fig. 11 gezeigten ersten Totpunktlage,
- Fig. 12: eine Schnittdarstellung entsprechend Fig. 11 in einer zweiten Totpunktlage der Koppelgetriebe,
- Fig. 12a: eine schematische Darstellung des ersten Koppelgetriebes in der in Fig. 12 gezeigten zweiten Totpunktlage,
- Fig. 12b: eine schematische Darstellung des ersten Koppelgetriebes, in der die Lage der Elemente des Koppelgetriebes für beide Totpunktlagen dargestellt sind,
- Fig. 13: eine Ansicht der Koppelgetriebe und der Werkzeuge in einer Zwischenlage zwischen der ersten Totpunktlage und der zweiten Totpunktlage,
- Fig. 13a: eine schematische Darstellung des ersten Koppelgetriebes in einer Zwischenlage zwischen der ersten und der zweiten Totpunktlage,
- Fig. 14 bis Fig. 17: Ansichten der Koppelgetriebe und der Werkzeuge in unterschiedlichen Lagen während einer Umdrehung des Exzenterbauteils,
- Fig. 18: eine Seitenansicht des Standfußbauteils des Arbeitsgeräts aus Fig. 1 in der Lage, in der sich das Standfußbauteil beim Arbeiten mit dem Arbeitsgerät befindet,
- Fig. 19: eine Seitenansicht des Standfußbauteils von der dem Werkzeugkopf abgewandten Seite in Richtung des Pfeils XIX in Fig. 20 in der Lage, in der sich das Standfußbauteil in auf dem Boden abgestelltem Zustand befindet,
- Fig. 20: eine Seitenansicht des Standfußbauteils in Richtung des Pfeils XX in Fig. 19,
- Fig. 21: eine Seitenansicht des Standfußbauteils von der dem Werkzeugkopf zugewandten Seite in Richtung des Pfeils XIX in Fig. 20.

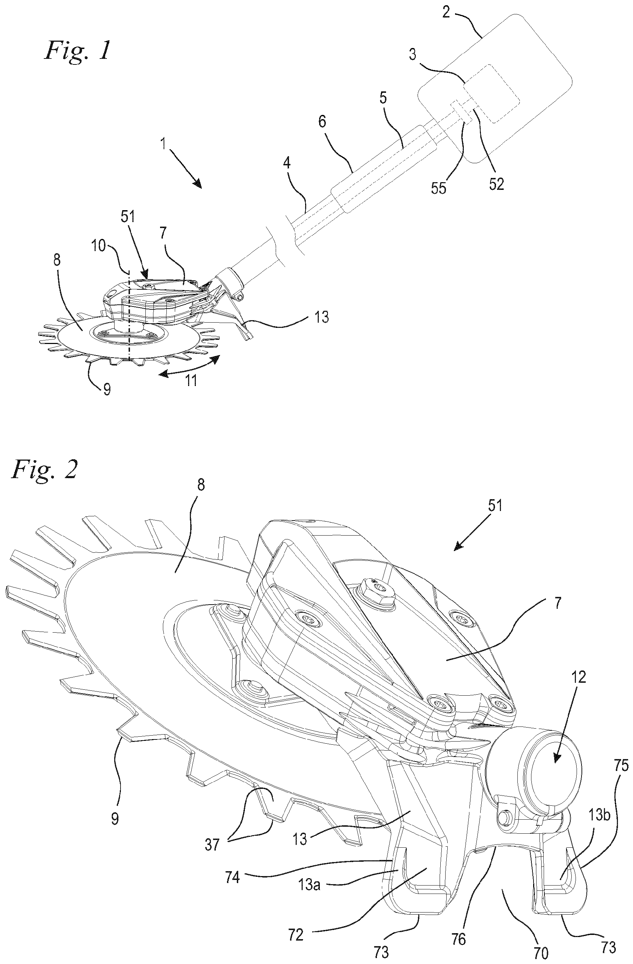

Fig. 1 zeigt schematisch ein handgeführtes Arbeitsgerät 1. Im Ausführungsbeispiel ist das handgeführte Arbeitsgerät 1 ein Freischneider. Das handgeführte Arbeitsgerät 1 besitzt ein Motorgehäuse 2 und einen Werkzeugkopf 51. Das Motorgehäuse 2 und der Werkzeugkopf 51 sind im Ausführungsbeispiel über ein Führungsrohr 4 miteinander verbunden. Im Motorgehäuse 2 ist ein Antriebsmotor 3 angeordnet. Der Antriebsmotor 3 kann ein Elektromotor oder ein Verbrennungsmotor, insbesondere ein Zweitaktmotor oder ein gemischgeschmierter Viertaktmotor, sein. Der Antriebsmotor 3 besitzt eine Motorabtriebswelle 52, die im Ausführungsbeispiel über eine Kupplung 55 mit einer Antriebswelle 5 verbunden ist. Die Antriebswelle 5 ragt durch das Führungsrohr 4 bis zum Werkzeugkopf 7. Eine Kupplung 55 ist insbesondere dann vorgesehen, wenn der Antriebsmotor 3 ein Verbrennungsmotor ist. Im Ausführungsbeispiel ist zwischen der Motorabtriebswelle 52 und der Antriebswelle 5 kein Getriebe angeordnet. Die Antriebswelle 5 dreht oberhalb der Einkuppeldrehzahl mit der gleichen Drehzahl wie die Motorabtriebswelle 52. Handelt es sich bei dem Antriebsmotor 3 um einen Elektromotor, so kann die Motorabtriebswelle 52 auch eine Getriebeausgangswelle eines im Motorgehäuse 2 angeordneten Getriebes sein. Vorteilhaft beträgt die Drehzahl der Motorabtriebswelle 52 und der Antriebswelle 5 mindestens 5.000 Umdrehungen pro Minute. Bevorzugt sind mindestens 8.000 Umdrehungen pro Minute vorgesehen.

Es kann auch zweckmäßig sein, einen als Elektromotor ausgebildeten Antriebsmotor 3 an dem Ende des Führungsrohrs 4 anzuordnen, an dem auch der Werkzeugkopf 51 angeordnet ist, und am anderen Ende des Führungsrohrs 4 eine Energieversorgung für den Elektromotor anzuordnen.

Am Führungsrohr 4 ist im Ausführungsbeispiel ein Handgriff 6 angeordnet, der das Führungsrohr 4 umgreift. Der Handgriff 6 kann auch als Bügelgriff oder auf andere Weise ausgebildet sein. Auch eine Anordnung eines oder mehrerer Handgriffe am Motorgehäuse 2 kann vorteilhaft sein.

Der Werkzeugkopf 51 besitzt ein Werkzeugkopfgehäuse 7, das am Führungsrohr 4 fixiert ist. Am Werkzeugkopf 51 sind zwei Werkzeuge 8 und 9 vorgesehen, die um eine Drehachse 10 hin- und herdrehend angetrieben sind. Die Werkzeuge 8 und 9 bewegen sich dabei wie durch den Doppelpfeil 11 in Fig. 1 angedeutet gegensinnig zueinander. Im Ausführungsbeispiel sind die Werkzeuge 8 und 9 als kreisförmige Messerscheiben vorgesehen. Auch eine andere Gestaltung der Werkzeuge 8 und 9, insbesondere eine kreissegmentförmige Gestaltung, kann jedoch vorteilhaft sein. Am Umfangsbereich der Werkzeuge 8 und 9 erstreckt sich ein Standfußbauteil 13.

Wie Fig. 2 zeigt, besitzen die Werkzeuge 8 und 9 jeweils eine Vielzahl von Zähnen 37. Die Werkzeuge 8 und 9 sind als Messerscheiben ausgebildet. Im Ausführungsbeispiel sind die Zähne 37 bei beiden Werkzeugen 8 und 9 über den Umfang gleichmäßig verteilt angeordnet. In den Umkehrpunkten der Werkzeuge 8 und 9 liegen die Zähne 37 der beiden Werkzeuge 8 und 9 in Überdeckung zueinander. Diese Position der Werkzeuge 8 und 9 ist in den Fig. 1 und 2 dargestellt. Es kann auch vorgesehen sein, dass die Werkzeuge 8 und 9 unterschiedlich gestaltet sind. Vorteilhaft sind die Massenträgheitsmomente der Werkzeuge 8 und 9 gleich. Es kann auch vorgesehen sein, eines der Werkzeuge 8, 9 schwerer auszubilden als das andere der Werkzeuge 8, 9 und das schwerere Werkzeug 8, 9 langsamer anzusteuern.

Die Zähne 37 der Werkzeuge 8 und 9 wirken nach Art einer Schere zusammen und schneiden Schnittgut wie beispielsweise Gras ab.

In alternativer Ausführung kann vorgesehen sein, dass die Werkzeuge 8, 9 nur über einen Abschnitt ihres Umfangs Zähne 37 aufweisen. Die Zähne 37 der Werkzeuge 8 und 9 sind bei dieser alternativen Ausführung vorteilhaft so angeordnet, dass sich die Zähne 37 der beiden Werkzeuge 8, 9 während einer Bewegung der Werkzeuge 8, 9 jeweils einer Drehrichtung zumindest teilweise überdecken.

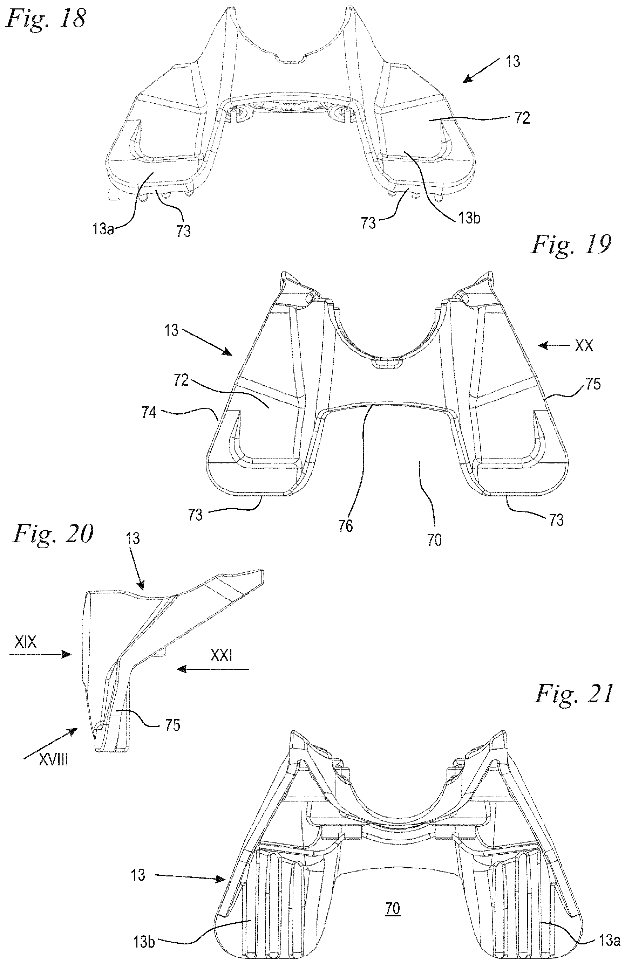

Wie Fig. 2 auch zeigt, besitzt das Werkzeugkopfgehäuse 7 eine Aufnahme 12, in die das Führungsrohr 4 eingesteckt und in dieser fixiert werden kann. Der Werkzeugkopf 51 besitzt außerdem das Standfußbauteil 13, das im Ausführungsbeispiel an der Seite der Aufnahme 12 angeordnet ist, die im Betrieb dem Boden zugewandt ist. Die Gestaltung des Standfußbauteils 13 stellt einen eigenständigen, vom Antrieb des mindestens einen Werkzeugs 8, 9 unabhängigen erfinderischen Gedanken da. Die Gestaltung des Standfußbauteils 13 ist auch in den Figuren 18 bis 21 im Einzelnen gezeigt.

Das Standfußbauteil 13 besitzt eine Umfangswand 72, die am Außenumfang der Werkzeuge 8 und 9 verläuft. Die Umfangswand 72 ist in Umfangsrichtung von einer ersten Stirnseite 74 und einer zweiten Stirnseite 75 begrenzt. Die Umfangswand 72 besitzt eine Aussparung 70, die zwei Abschnitte 13a und 13b der Umfangswand 72 voneinander trennt. Es können auch mehrere Aussparungen 70 und mehr als zwei Abschnitte der Umfangswand 72 vorgesehen sein. Die Aussparung 70 ist in Umfangsrichtung in einem Bereich der Umfangswand 72 zwischen der ersten Stirnseite 74 und der zweiten Stirnseite 75 angeordnet. Das Standfußbauteil 13 besitzt eine Unterseite 73, mit der das Standfußbauteil 13 auf dem Boden abgestellt werden kann. Die Aussparung 70 erstreckt sich von der Ebene der Unterseite 73 bis zu einer Oberseite 76 der Aussparung 70.

Die Figuren 19 bis 21 zeigen das Standfußbauteil 13 in der Lage, in der sich das Standfußbauteil 13 beim Abstellen auf dem Boden befindet. In dieser Lage verläuft das Führungsrohr 4 des Arbeitsgeräts 1 vorteilhaft näherungsweise parallel zum Boden. Die Unterseiten 73 sind als Flächen ausgebildet, die im Betrieb des Arbeitsgeräts 1 zum Boden geneigt verlaufen. Beim Abstellen auf dem Boden liegen die Unterseiten 73 vorteilhaft parallel zum Boden und liegen flächig auf dem Boden auf. Die Werkzeuge 8 und 9 verlaufen in dieser Position zum Boden geneigt und berühren den Boden vorteilhaft nicht.

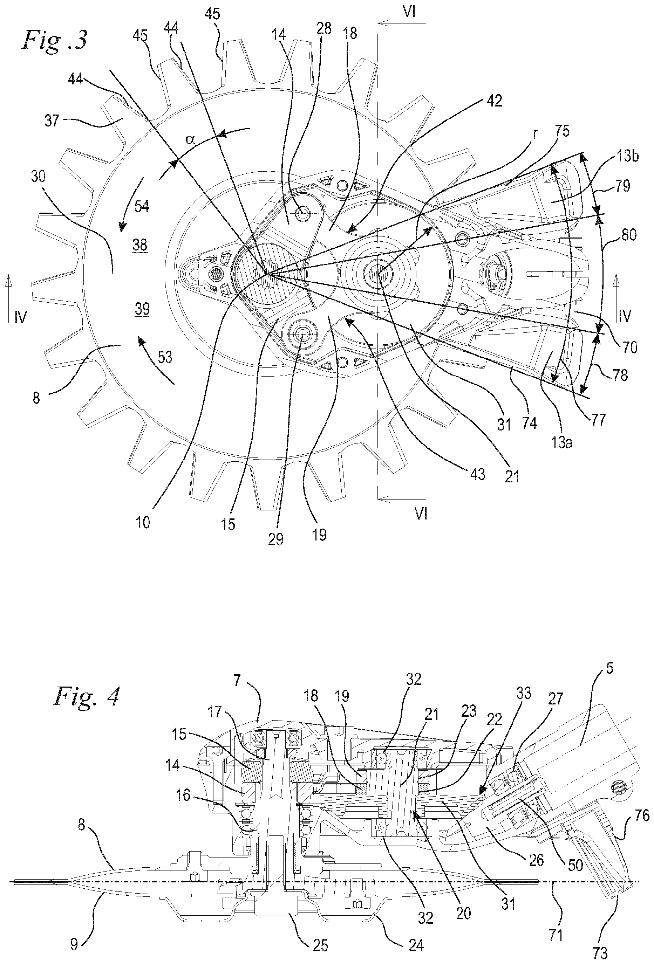

Wie Fig. 4 zeigt, bilden die Werkzeuge 8 und 9 eine Schneidebene 71. Die Schneidebene 71 ist die Ebene, in der die Werkzeuge 8 und 9 einen Schnitt ausführen. Das ist die Ebene, in der die Vorderkanten der Zähne 37 liegen. Wie Fig. 4 zeigt, schneidet die Schneidebene 71 die Abschnitte 13a und 13b der Umfangswand 72 des Standfußbauteils 13. Die Umfangswand 72 ragt demnach durch die Schneidebene 71. Die Oberseite 76 der Aussparung 70 und die Unterseite 73 der Umfangswand 72 liegen auf gegenüberliegenden Seiten der Schneidebene 71. Die Aussparung 70 erstreckt sich durch die Schneidebene 71.

In Fig. 3 ist die Erstreckung der Abschnitte 13a und 13b sowie die Erstreckung der Aussparung 70 der Umfangswand 72 in Umfangsrichtung um die Drehachse 10 gezeigt. Die Erstreckung der Umfangswand 72 ist dabei in der Schneidebene 71 gemessen. Die Umfangswand 72 erstreckt sich von der ersten Stirnseite 74 bis zur zweiten Stirnseite 75 in der Schneidebene 71 über einen Winkel 77 um die Drehachse 10. Der Winkel 77 beträgt vorteilhaft weniger als 60°. Bevorzugt ist die Umfangswand 72 symmetrisch zu einer Symmetrieebene ausgebildet, die senkrecht zur Schneidebene 71 verläuft und die die Drehachse 10 enthält. Diese Symmetrieebene entspricht der Schnittebene in Fig. 4. Die Stirnseiten 74 und 75 besitzen zu dieser Symmetrieebene vorteilhaft einen Winkelabstand von weniger als 30° um die Drehachse 10. Die Symmetrieebene entspricht vorteilhaft der Mittelebene 30 des Werkzeugkopfs 51. Die Mittelebene 30 verläuft durch die Drehachse 10 und die Koppeltriebachse 21.

Die Aussparung 70 erstreckt sich in der Schneidebene 71 über einen Winkel 80 um die Drehachse 10. Die Aussparung ist vorteilhaft symmetrisch zu der Symmetrieebene, insbesondere zur Mittelebene 30, ausgebildet. Der Abschnitt 13a erstreckt sich in der Schneidebene 71 über einen Winkel 78 um die Drehachse 10. Der Abschnitt 13b erstreckt sich in der Schneidebene 71 über einen Winkel 79 um die Drehachse 10. Die Winkel 78 und 79 sind vorteilhaft gleich groß. Der Winkel 80 ist vorteilhaft größer als der Winkel 78 und größer als der Winkel 79.

Wie Fig. 3 zeigt, weist der Werkzeugkopf 51 ein erstes Koppelgetriebe 42 zum Antrieb des ersten Werkzeugs 8 sowie ein zweites Koppelgetriebe 43 zum Antrieb des zweiten Werkzeugs 9 auf. Im Ausführungsbeispiel ist das Werkzeug 8 dem Werkzeugkopfgehäuse 7 zugewandt angeordnet, wie auch Fig. 4 zeigt. Das zweite Werkzeug 9 liegt auf der dem Werkzeugkopfgehäuse 7 abgewandten Seite des ersten Werkzeugs 8.

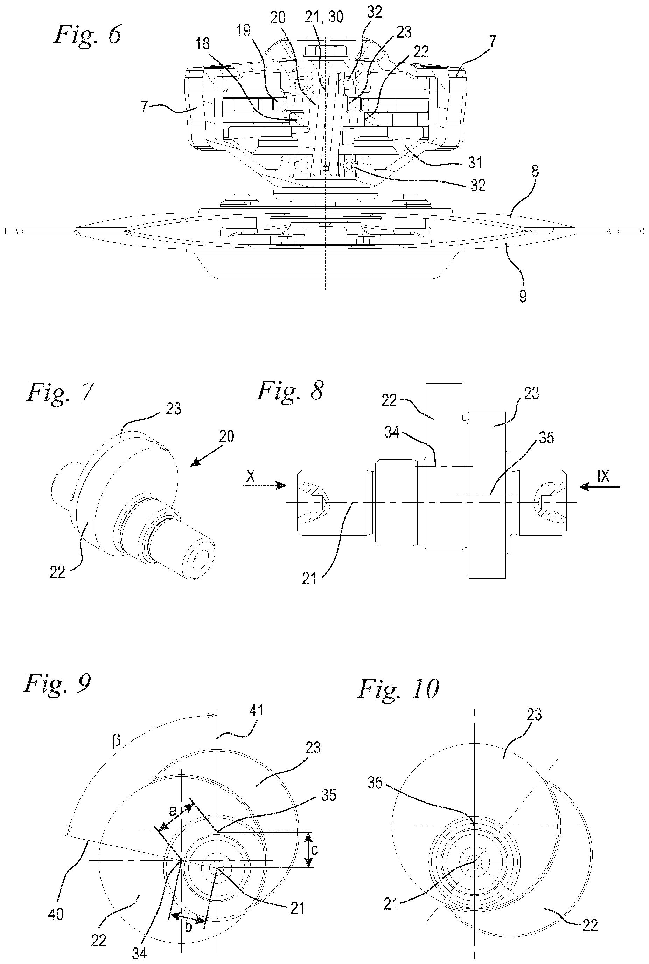

Das erste Koppelgetriebe 42 umfasst ein erstes Antriebsglied 22 (Fig. 4), ein erstes Koppelglied 18 sowie ein erstes Abtriebsglied 14. Das erste Antriebsglied 22 und das erste Abtriebsglied 14 sind gegenüber dem Werkzeugkopfgehäuse 7 drehbar gelagert. Das erste Antriebsglied 22 ist, wie Fig. 9 zeigt, als Exzenter ausgebildet und drehbar im Werkzeugkopfgehäuse 7 gelagert. Das erste Antriebsglied 22 ist im Betrieb um eine in Fig. 3 und 4 dargestellte Koppeltriebachse 21 rotierend angetrieben. Das erste Antriebsglied 22 ist mit dem ersten Koppelglied 18 um die in Fig. 9 gezeigte erste Gelenkachse 34 schwenkbar gekoppelt. Das erste Koppelglied 18 ist mit dem ersten Abtriebsglied 14 um die in Fig. 3 gezeigte zweite Gelenkachse 28 schwenkbar gekoppelt. Das erste Abtriebsglied 14 ist drehbar im Werkzeugkopfgehäuse 7 gelagert. Das erste Abtriebsglied 14 ist drehfest mit dem ersten Werkzeug 8 verbunden. Alternativ kann vorgesehen sein, dass das erste Koppelglied 18 an der Gelenkachse 28 unmittelbar mit dem ersten Werkzeug 8 schwenkbar verbunden ist. Das erste Koppelgetriebe 42 ist ein Koppelgetriebe mit vier Gliedern, die durch das erste Antriebsglied 22, das erste Koppelglied 18, das erste Abtriebsglied 14 sowie das Werkzeugkopfgehäuse 7 gebildet sind.

Das zweite Koppelgetriebe 43 umfasst ein zweites Antriebsglied 23 (Fig. 4), ein zweites Koppelglied 19 sowie ein zweites Abtriebsglied 15. Das zweite Antriebsglied 23 ist, wie Fig. 9 zeigt, als Exzenter ausgebildet. Das zweite Antriebsglied 23 ist im Betrieb gemeinsam mit dem ersten Antriebsglied 22 um die Koppeltriebachse 21 rotierend angetrieben. Das zweite Antriebsglied 23 ist mit dem zweiten Koppelglied 19 um die in Fig. 9 gezeigte dritte Gelenkachse 35 schwenkbar gekoppelt. Das zweite Koppelglied 19 ist mit dem zweiten Abtriebsglied 15 um eine vierte Gelenkachse 29 schwenkbar gekoppelt. Das zweite Abtriebsglied 15 ist drehfest mit dem zweiten Werkzeug 9 verbunden. Alternativ kann auch hier vorgesehen sein, dass das zweite Koppelglied 19 an der Gelenkachse 29 unmittelbar mit dem zweiten Werkzeug 9 gekoppelt ist. Das zweite Koppelgetriebe 43 ist ein Koppelgetriebe mit vier Gliedern, die durch das zweite Antriebsglied 23, das zweite Koppelglied 19, das zweite Abtriebsglied 15 sowie das Werkzeugkopfgehäuse 7 gebildet sind.

Die beiden Antriebsglieder 22 und 23 sind, wie Fig. 4 zeigt, im Ausführungsbeispiel an einem gemeinsamen Exzenterbauteil 20 ausgebildet und um die gemeinsame Koppeltriebachse 21 drehbar gelagert. Das Exzenterbauteil 20 ist drehfest mit einem Tellerrad 31 verbunden. Das Tellerrad 31 kämmt mit einem Antriebsritzel 26. Das Antriebsritzel 26 ist drehfest mit der Antriebswelle 5 verbunden. Zur drehfesten Verbindung des Antriebsritzels 26 mit der Antriebswelle 5 ist eine Anschlusskontur 50 im Antriebsritzel 26 vorgesehen, in die die Antriebswelle 5 eingreift. Das Antriebsritzel 26 dreht dadurch mit der gleichen Drehzahl wie die Motorabtriebswelle 52 (Fig. 1). Zwischen dem Tellerrad 31 und dem Antriebsritzel 26 ist im Ausführungsbeispiel keine zusätzliche Getriebestufe vorgesehen. Um dennoch eine vergleichsweise geringe Drehzahl des Tellerrads 31 zu erreichen, ist das Tellerrad 31 vergleichsweise groß ausgebildet. Wie Fig. 3 zeigt, besitzt das Tellerrad 31 einen größten Radius r. Der größte Radius r ist der halbe größte Durchmesser des Tellerrads 31.

Wie Fig. 4 zeigt, ist das erste Abtriebsglied 14 drehfest mit einer Hülse 16 verbunden, die ihrerseits fest mit dem ersten Werkzeug 8 verbunden ist. Das zweite Abtriebsglied 15 ist drehfest mit einer Welle 17 verbunden, die durch die Hülse 16 auf die dem Werkzeugkopfgehäuse 7 abgewandte Seite des Werkzeugs 8 ragt. An der Welle 17 ist das zweite Werkzeug 9 drehfest fixiert. Am Werkzeug 9 ist außerdem eine Abdeckung 24 angeordnet, die die Verbindung der Welle 17 mit dem zweiten Werkzeug 9 vor Verschmutzung schützt und die mit einer Befestigungsschraube 25 an der Welle 17 fixiert ist. Beim Arbeiten mit dem Arbeitsgerät 1 bildet die Abdeckung 24 einen Auflagepunkt. Zum Abstellen des Arbeitsgeräts 1 sind zwei Auflagepunkte durch die Unterseite 73 der Umfangswand 73 in den beiden Abschnitten 13a und 13b gebildet. Dadurch ist eine definierte Auflage beim Abstellen des Arbeitsgeräts 1 sichergestellt.

Wie Fig. 4 auch zeigt, ist das Exzenterbauteil 20 mit Lagern 32 im Werkzeugkopfgehäuse 7 gelagert. Die Lager 32 sind im Ausführungsbeispiel als Wälzlager ausgebildet. Das Antriebsritzel 26 und das Tellerrad 31, die miteinander kämmen, bilden ein Getriebe 33, das als Untersetzungsgetriebe ausgebildet ist. Das Antriebsritzel 26 ist mit Lagern 27 im Werkzeugkopfgehäuse 7 drehbar gelagert.

Wie die Fig. 3 und 4 zeigen, liegen die Koppelglieder 18 und 19 an der den Werkzeugen 8 und 9 abgewandten Seite des Tellerrads 31. Wie insbesondere Fig. 4 zeigt, liegen auch die Antriebsglieder 22 und 23 an der den Werkzeugen 8 und 9 abgewandten Seite des Tellerrads 31. Das Tellerrad 31 erstreckt sich bezogen auf die Richtung der Koppeltriebachse 21 bzw. der Drehachse 10 zumindest teilweise zwischen den Antriebsgliedern 22 und 23 und den Werkzeugen 8 und 9. Dadurch, dass das Tellerrad 31 zwischen die Antriebsglieder 22 und 23 und die Werkzeuge 8 und 9 ragt, ergeben sich ein kompakter Aufbau und eine geringe Baugröße der Anordnung.

Wie Fig. 3 zeigt, besitzt der Werkzeugkopf 51 eine Mittelebene 30. Die Mittelebene 30 wird von der Drehachse 10 der Werkzeuge 8 und 9 und der Koppeltriebachse 21 aufgespannt. Wie Fig. 3 zeigt, liegt die zweite Gelenkachse 28 auf einer ersten Seite 38 der Mittelebene 30. Die vierte Gelenkachse 29 liegt auf einer zweiten Seite 39 der Mittelebene 30. Die Gelenkachsen 28 und 29 liegen auf gegenüberliegenden Seiten der Mittelebene 30. Die Mittelebene 30 erstreckt sich zwischen der zweiten Gelenkachse 28 und der vierten Gelenkachse 29. Die Abtriebsglieder 14 und 15 sind spiegelsymmetrisch zur Mittelebene 30 angeordnet. Dadurch können die im Betrieb entstehenden Vibrationen, die von den Koppelgetrieben 42 und 43 erzeugt werden, minimiert werden.

Wie Fig. 3 auch zeigt, besitzt das erste Werkzeug 8 an den Zähnen 37 jeweils eine Schneidkante 44, die in einer ersten Drehrichtung 53 vorlaufend zu den jeweiligen zugeordneten Zähnen 37 angeordnet ist. Die Zähne 37 besitzen im Ausführungsbeispiel außerdem jeweils eine Schneidkante 45, die bezogen auf eine entgegengesetzt gerichtete, zweite Drehrichtung 54 vorlaufend zum zugeordneten Zahn 37 angeordnet ist. Die erste Drehrichtung 53 ist in Draufsicht auf das erste Werkzeug 8 vom Werkzeugkopfgehäuse 7 aus im Uhrzeigersinn ausgerichtet und die zweite Drehrichtung 54 im Gegenuhrzeigersinn.

Wie Fig. 3 zeigt, sind Schneidkanten 44 benachbarter Zähne 37 mit einem Winkelabstand α zueinander angeordnet, der im Ausführungsbeispiel der Teilung der Zähne entspricht. Im Ausführungsbeispiel sind einundzwanzig Zähne 37 gleichmäßig verteilt über den Umfang angeordnet. Der Winkelabstand α beträgt im Ausführungsbeispiel etwa 17°. Vorteilhafte Werte für den Winkelabstand α betragen 10° bis 30°. Der Winkelabstand α ist dabei jeweils vom gleichen Punkt jeder Schneidkante 44 zum entsprechenden Punkt der benachbarten Schneidkante 44 gemessen. Vorteilhaft ist der Winkelabstand α an den radial innenliegenden Seiten der Schneidkanten 44 gemessen.

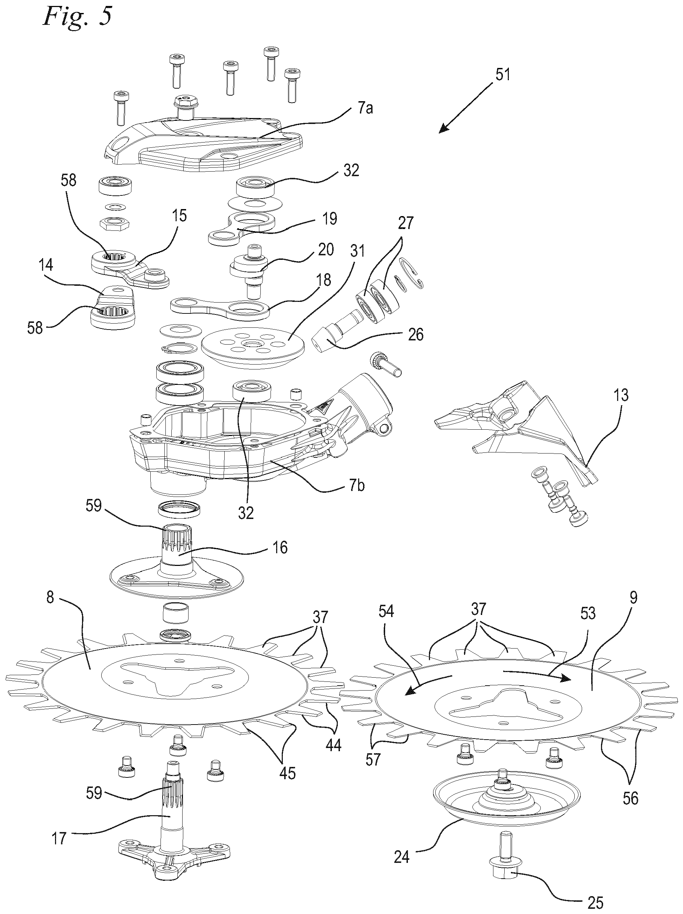

Fig. 5 zeigt den Aufbau des Werkzeugkopfs 51 im Einzelnen. Das Werkzeugkopfgehäuse 7 besitzt ein oberes Werkzeugkopfgehäuseteil 7a sowie ein unteres Werkzeugkopfgehäuseteil 7b. Das Tellerrad 31 und das Exzenterbauteil 20 sind mit Lagern 32 im Werkzeugkopfgehäuse 7 um die Koppeltriebachse 21 (Fig. 4) drehbar gelagert. Die Koppelglieder 18 und 19 sind mit den Abtriebsgliedern 14 und 15 schwenkbar gekoppelt. Die Abtriebsglieder 14 und 15 besitzen Verzahnungen 58, die mit Gegenverzahnungen 59 an der Hülse 16 bzw. der Welle 17 in Eingriff stehen und so eine drehfeste Verbindung zwischen dem ersten Abtriebsglied 14 und der Hülse 16 bzw. dem zweiten Abtriebsglied 15 und der Welle 17 herstellen. Wie Fig. 5 auch zeigt, besitzen die Zähne 37 des zweiten Werkzeugs 9 Schneidkanten 56 sowie Schneidkanten 57. Die Schneidkanten 56 liegen bei einer Drehung in der ersten Drehrichtung 53 vorlaufend zum jeweiligen Zahn 37, während die Schneidkanten 57 bei einer Drehung in der zweiten Drehrichtung 54 vorlaufend zu den jeweiligen Zähnen 37 angeordnet sind.

Vorteilhaft entspricht der Weg, den jeder Zahn 37 bei einer Umdrehung des Exzenterbauteils 20 zurücklegt, dem Winkelabstand α. Da sich die Messer 8 und 9 gegensinnig bewegen, überstreicht jede Schneidkante 44 bei der Bewegung in der ersten Drehrichtung 53 zwei in der zweiten Drehrichtung 54 vorne liegende Schneidkanten 57 der Zähne 37 des zweiten Werkzeugs 9. Bei der Rückbewegung überstreicht jede Schneidkante 45 zwei in der ersten Drehrichtung 53 vorne liegende Schneidkanten 56 des zweiten Werkzeugs 9. Dadurch ergeben sich bei jeder Umdrehung des Exzenterbauteils 2 insgesamt vier Schnittereignisse, nämlich zwei Schnittereignisse, bei denen Schneidkanten 44 mit Schneidkanten 47 zusammenwirken, sowie zwei Schnittereignisse, bei denen Schneidkanten 45 mit Schneidkanten 46 zusammenwirken. Die beiden Schnittereignisse, die während einer Bewegung der Werkzeuge 8 und 9 in eine Richtung stattfinden, finden dabei mit unterschiedlichen Geschwindigkeiten statt.

Die Lagerung des Exzenterbauteils 20 im Werkzeugkopfgehäuse 7 ist in Fig. 6 gezeigt. In Fig. 6 ist auch die Anordnung des Tellerrads 31 teilweise zwischen den Koppelgliedern 18 und 19 und den Werkzeugen 8 und 9 gezeigt. Wie Fig. 6 auch zeigt, ist das Tellerrad 31 auch teilweise zwischen den Antriebsgliedern 22, 23 und den Werkzeugen 8 und 9 angeordnet. Die Antriebsglieder 22 und 23 sind an der den Werkzeugen 8 und 9 abgewandten Seite des Tellerrads 31 angeordnet.

In den Fig. 7 bis 10 ist das Exzenterbauteil 20 gezeigt. Das Exzenterbauteil 20 ist einteilig ausgebildet und bildet mit einem ersten Exzenter das Antriebsglied 22 und mit einem zweiten Exzenter das Antriebsglied 23. Die erste Gelenkachse 34 ist die Mittelachse des Exzenters, der das Antriebsglied 22 bildet. Die dritte Gelenkachse 35 ist die Mittelachse des Exzenterabschnitts, der das zweite Antriebsglied 23 bildet. In alternativer Gestaltung könnten die Antriebsglieder 22 und 23 auch durch Gelenkhebel gebildet sein, die um die Koppeltriebachse 21 drehbar gelagert sind und an den Gelenkachsen 34 und 35 jeweils mit einem der Koppelglieder 18 und 19 gelenkig verbunden sind.

Das erste Antriebsglied 22 besitzt eine in Fig. 9 eingezeichnete erste Antriebsgliedachse 40. Die erste Antriebsgliedachse 40 erstreckt sich zwischen den Gelenkpunkten Koppeltriebachse 21 und erste Gelenkachse 34. In den Totpunktlagen des ersten Koppelgetriebes 42 befinden sich die erste Antriebsgliedachse 40 und die erste Koppelgliedachse 48 in Flucht, liegen also in einer Linie. Das zweite Antriebsglied 23 besitzt eine zweite Antriebsgliedachse 41. Die zweite Antriebsgliedachse 41 erstreckt sich zwischen den Gelenkpunkten Koppeltriebachse 21 und dritte Gelenkachse 35. In den Totpunktlagen des zweiten Koppelgetriebes 43 befinden sich die zweite Antriebsgliedachse 41 und die zweite Koppelgliedachse 49 in Flucht, liegen also in einer Linie. Das erste Koppelgetriebe 42 und das zweite Koppelgetriebe 43 durchlaufen ihre Totpunktlagen vorteilhaft gleichzeitig.

Wie Fig. 9 zeigt, schließen die Antriebsgliedachsen 40 und 41 einen Winkel β ein. Der Winkel β ist größer als 0°. Der Winkel β zwischen der ersten Antriebsgliedachse 40 und der zweiten Antriebsgliedachse 41 ist für jede mögliche Lage der Koppelgetriebe 42 und 43 im Betrieb kleiner als 180°. Der Winkel β ist vorteilhaft kleiner als 140°, vorzugsweise kleiner als 100°, besonders bevorzugt kleiner als 80°.

Wie Fig. 9 zeigt, besitzen die Gelenkachsen 34 und 35 einen Abstand a zueinander. Die erste Gelenkachse 34 besitzt zur Koppeltriebachse 21 einen Abstand b. Die dritte Gelenkachse 35 besitzt zur Koppeltriebachse 21 einen Abstand c. Im Ausführungsbeispiel sind die Abstände b und c gleich groß. Der Abstand a beträgt vorteilhaft das 0,8fache bis 1,5fache des Abstands b oder des Abstands c. Der Radius r des Tellerrads 31 (Fig. 3) beträgt vorteilhaft mindestens das 3,5fache, insbesondere mindestens das 5fache des Abstands b der ersten Gelenkachse 34 zur Koppeltriebachse 21. Bevorzugt beträgt der Radius r des Tellerrads 31 mindestens das 3,5fache, bevorzugt mindestens das 5fache des Abstands c der dritten Gelenkachse 35 zur Koppeltriebsachse 21.

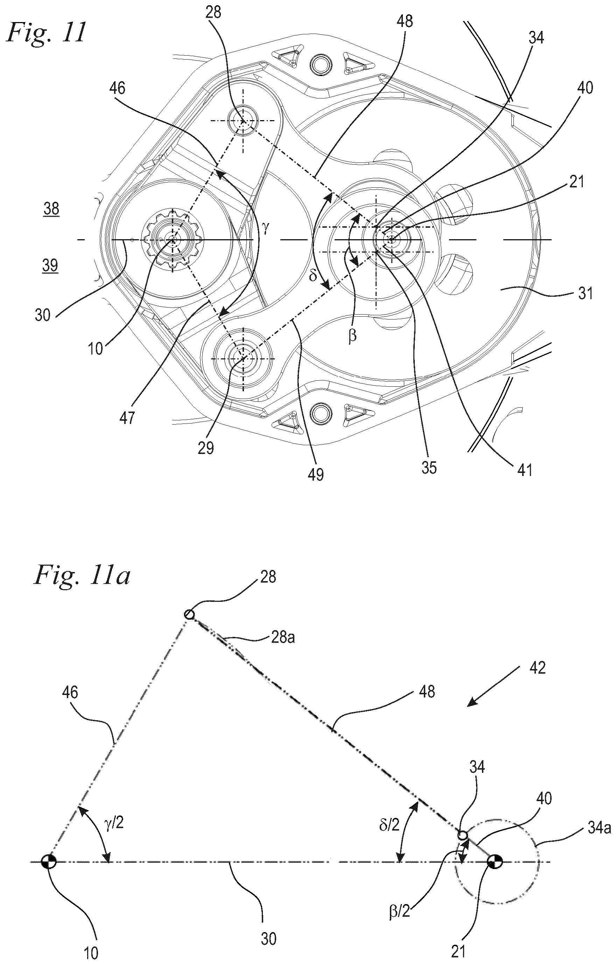

Fig. 11 zeigt die Koppelgetriebe 42 und 43 in einer ersten Endlage. In der gezeigten Ansicht mit Blickrichtung in Richtung der Koppeltriebachse 21 bildet die gedachte gerade Verbindung der zweiten Gelenkachse 28 mit der Drehachse 10 eine erste Abtriebsgliedachse 46. Die gedachte gerade Verbindung der vierten Gelenkachse 29 mit der Drehachse 10 bildet eine zweite Abtriebsgliedachse 47. Die erste Abtriebsgliedachse 46 und die zweite Abtriebsgliedachse 47 schließen einen Winkel γ ein, der in der in Fig. 11 gezeigten Stellung der Koppelgetriebe 42 und 43 seinen maximalen Wert annimmt. Der Winkel γ ist vorteilhaft größer als 90°.

Die gedachte gerade Verbindung der zweiten Gelenkachse 28 mit der ersten Gelenkachse 34 in der gezeigten Ansicht mit Blickrichtung in Richtung der Koppeltriebachse 21 bildet eine erste Koppelgliedachse 48. Die gedachte gerade Verbindung der vierten Gelenkachse 29 mit der dritten Gelenkachse 35 bildet in dieser Ansicht eine zweite Koppelgliedachse 49.

Die erste Antriebsgliedachse 40 und die zweite Antriebsgliedachse 41 schließen den Winkel β ein. Die Antriebsgliedachsen 40 und 41 liegen in der in Fig. 11 gezeigten Totpunktlage in gerader Verlängerung der Koppelgliedachsen 48 und 49. Der Winkel β, den die Antriebsgliedachsen 40 und 41 einschließen, ist vorteilhaft kleiner als 180°, insbesondere kleiner als 140°, vorzugsweise kleiner als 100°, besonders bevorzugt kleiner als 90°. Die Gelenkachsen 34 und 35 liegen symmetrisch zur Mittelebene 30. Die erste Gelenkachse 34 liegt auf der ersten Seite 38 der Mittelebene 30, und die dritte Gelenkachse 35 liegt auf der zweiten Seite 39 der Mittelebene 30.

Die Koppelgliedachsen 48 und 49 schließen miteinander einen Winkel δ ein. In den Totpunktlagen ist die Differenz zwischen dem Winkel β und dem Winkel δ bevorzugt sehr klein. Die Winkel β und δ sind in den Totpunktlagen insbesondere gleich groß. In den Totpunktlagen beträgt die Differenz zwischen den Winkeln β und δ vorteilhaft 0° bis 10°.

Durch eine vergleichsweise kleine oder insbesondere keine Differenz zwischen dem Winkel β zwischen den Antriebsgliedachsen 40 und 41 und dem Winkel δ zwischen den Koppelgliedachsen 48 und 49 in den Totpunktlagen lässt sich ein nahezu synchroner Lauf der beiden Koppelgetriebe 42 und 43 realisieren. Hierbei erreichen die beiden Koppelgetriebe 42 und 43 nicht nur gleichzeitig ihre Totpunktlagen, sondern haben insbesondere auch zwischen ihren Totpunktlagen einen synchronen Geschwindigkeitsverlauf. Dadurch lassen sich geringe Vibrationen bei geringem Bauraum des Werkzeugkopfs 51 erreichen.

Fig. 11a zeigt schematisch die Lage der Elemente des ersten Koppelgetriebes 42 in der in Fig. 11 gezeigten ersten Totpunktlage. Die Drehachse 10 und die Koppeltriebachse 21 sind ortsfest am Werkzeugkopfgehäuse 7 angeordnet. Die zweite Gelenkachse 28 bewegt sich im Betrieb entlang der Bewegungsbahn 28a hin und her und befindet sich in der in Fig. 11a gezeigten ersten Totpunktlage in ihrer äußeren Umkehrlage. Die erste Gelenkachse 34 läuft um die Koppeltriebachse 21 entlang der Bewegungsbahn 34a um. Die erste Antriebsgliedachse 40 schließt mit der Mittelebene 30 den halben Winkel β ein. Die erste Koppelgliedachse 48 schließt mit der Mittelebene 30 den halben Winkel δ ein, der dem halben Winkel β im Ausführungsbeispiel näherungsweise entspricht. Die erste Abtriebsgliedachse 46 schließt mit der Mittelebene 30 den halben Winkel γ ein.

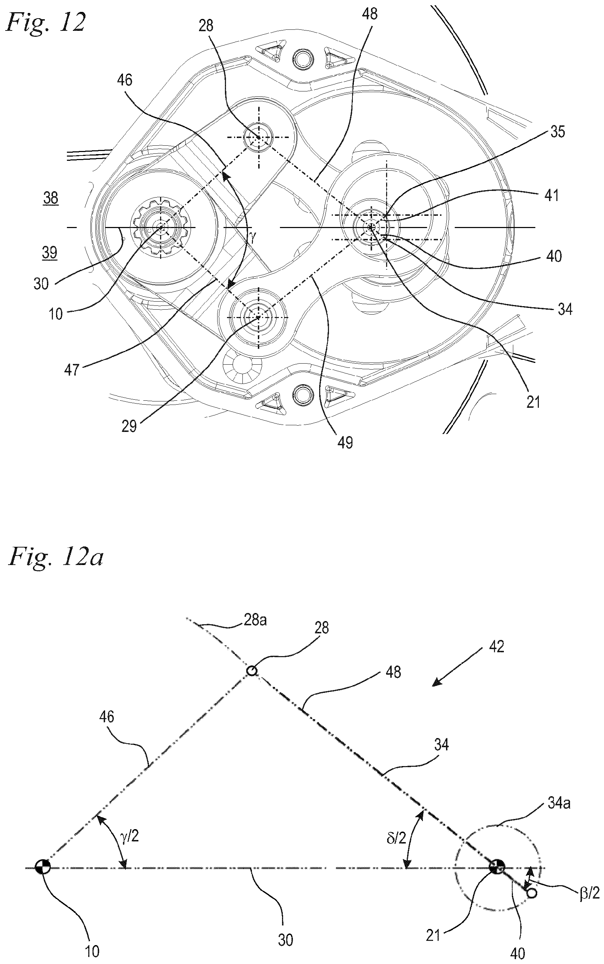

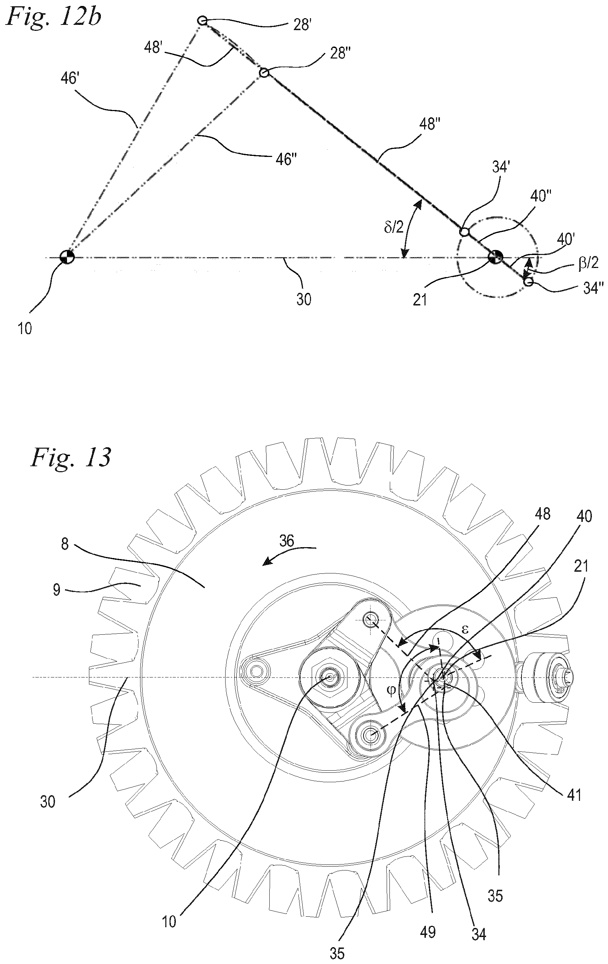

Fig. 12 zeigt die Anordnung in einer zweiten Totpunktlage, in der die Abtriebsgliedachsen 46 und 47 einen minimalen Winkel γ einschließen. Die Antriebsgliedachsen 40 und 41 liegen in Überdeckung mit den Koppelgliedachsen 48 und 49. Die Antriebsgliedachsen 40 und 41 schließen den Winkel β ein, der vorteilhaft gleich groß ist wie der Winkel β in der in Fig. 11 gezeigten Lage. Die Gelenkachsen 34 und 35 liegen auch in der zweiten Totpunktlage symmetrisch zur Mittelebene 30. Die erste Gelenkachse 34 liegt auf der zweiten Seite 39 der Mittelebene 30, und die dritte Gelenkachse 35 liegt auf der ersten Seite 38 der Mittelebene 30.

Fig. 12a zeigt die Lage der Elemente des ersten Koppelgetriebes 42 in der in Fig. 12 gezeigten zweiten Totpunktlage schematisch. Die zweite Gelenkachse 28 befindet sich im Ausführungsbeispiel auf der Bewegungsbahn 28a in ihrem inneren Umkehrpunkt. Die erste Antriebsgliedachse 41 schließt mit der Mittelebene 30 den halben Winkel β ein. Die erste Koppelgliedachse 48 schließt mit der Mittelebene 30 den halben Winkel δ ein, der dem halben Winkel β im Ausführungsbeispiel näherungsweise entspricht.

Fig. 12b zeigt schematisch die Lage der Elemente des ersten Koppelgetriebes 42 in der ersten und der zweiten Totpunktlage im Vergleich. In der ersten Totpunktlage sind die jeweiligen Elemente dabei mit einem Strich gekennzeichnet und in der zweiten Totpunktlage mit zwei Strichen. Im Ausführungsbeispiel entspricht das kinematische Schema des Koppeltriebes 42, 43 einer zentrischen Kurbelschwinge, wonach - wie die Figur zeigt - die halben Winkel β und δ für beide Totpunktlagen etwa gleich groß sind.

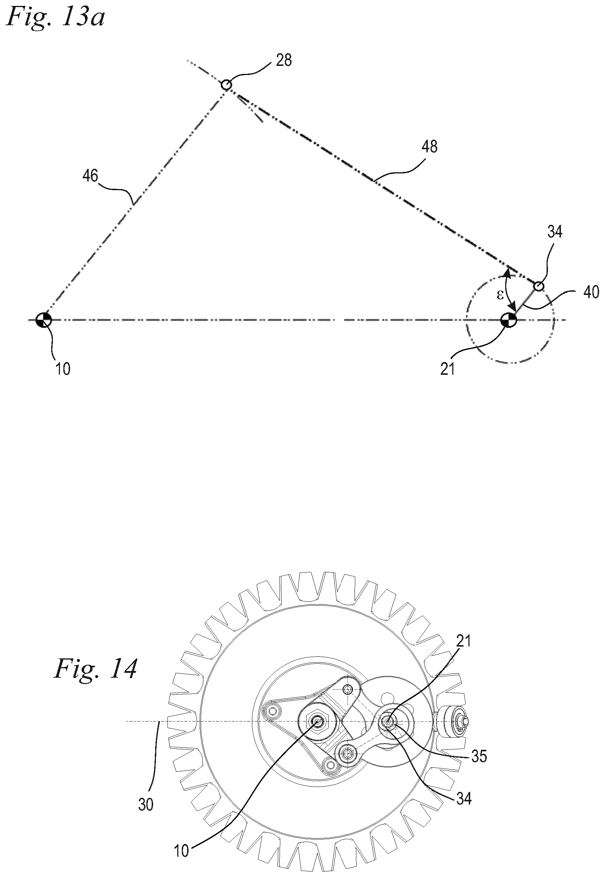

Fig. 13 zeigt die Anordnung abseits einer Totpunktlage. Wie Fig. 13 zeigt, schließen die erste Antriebsgliedachse 40 und die erste Koppelgliedachse 48 einen ersten Antriebswinkel ε ein. Die zweite Koppelgliedachse 49 und die zweite Antriebsgliedachse 41 schließen einen Winkel ϕ ein. Im Betrieb ändern sich aufgrund der Drehung der Antriebsglieder 40, 41 der Winkel ε und der Winkel ϕ. Dadurch, dass beide Antriebsgliedachsen 46, 47 an einem gemeinsamen Bauteil, insbesondere Exzenterbauteil 20 angeordnet sind, werden beide Koppelgetriebe 42, 43 gemeinsam angetrieben. Der Stellung des ersten Koppelgetriebes 42 ist demnach eine definierte Stellung des zweiten Koppelgetriebes 43 zugeordnet. Die Antriebsgliedachsen 40 und 41 sind so angeordnet, dass der Winkel ε und der zugehörige Winkel ϕ für jede Stellung der Koppelgetriebe 42, 43 in Bezug aufeinander zumindest annähernd gleich groß sind. Die Differenz der Winkel ε und ϕ beträgt vorteilhaft weniger als 5°, insbesondere weniger als 2°. Der Winkel β entspricht hierfür dem doppelten des Winkels, den die Antriebsgliedachse 40 in einer Totpunktlage mit einer Achse durch die gestellfesten Drehpunkte, nämlich die Drehachse 10 und die Koppeltriebachse 21 der Koppelgetriebe 42, 43 einschließt. Die beiden Koppelgetriebe 42, 43 laufen auf diese Weise zumindest näherungsweise synchron, erreichen also insbesondere nicht nur gleichzeitig ihre Totpunktlagen, sondern haben auch abseits der Totpunktlagen einen zumindest annähernd gleichen Geschwindigkeitsverlauf. Dadurch werden Massenkräfte zweiter Ordnung nahezu vollständig kompensiert.

In Fig. 13a ist eine Zwischenlage zwischen der ersten und der zweiten Totpunktlage für die Elemente des ersten Koppelgetriebes 42 schematisch dargestellt. Hier ist der erste Antriebswinkel ε gut erkennbar.

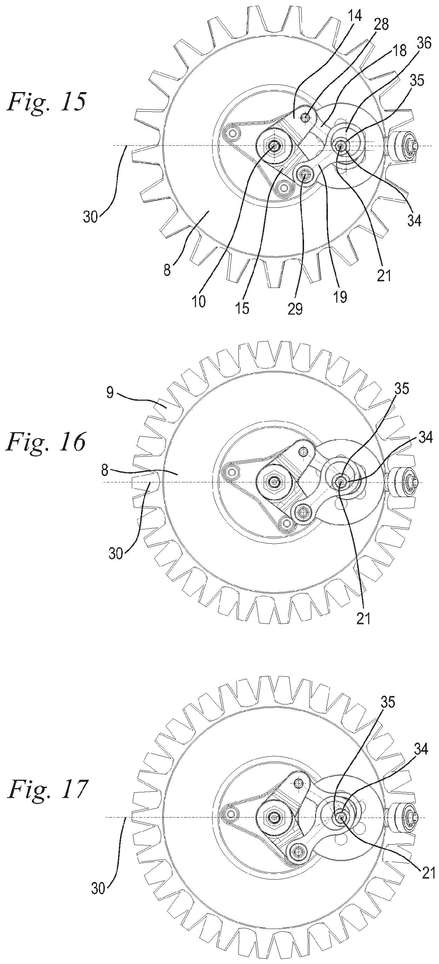

Bei der Darstellung in Fig. 13 hat sich das Exzenterbauteil 20 gegenüber der Darstellung in Fig. 11 in Richtung des Pfeils 36 um 60° weitergedreht. Fig. 14 zeigt die Anordnung nach weiterer Drehung um 60° in Richtung des Pfeils 36. Bei weiterer Drehung um 60° gelangt die Anordnung in die in Fig. 15 gezeigte Position, bei weiterer Drehung um 60° in die in Fig. 16 gezeigte Position und bei weiterer Drehung um 60° in die in Fig. 17 gezeigte Position. Anschließend wird die in Fig. 11 gezeigte Totpunktlage wieder erreicht. Die in Fig. 15 gezeigte Position entspricht der in Fig. 12 gezeigten zweiten Totpunktlage. Wie die Fig. 11 bis 17 zeigen, laufen die Abtriebsglieder 14 und 15 nicht um die Drehachse 10 um, sondern schwenken hin und her.

## Patentansprüche

1. Werkzeugkopf für ein handgeführtes Arbeitsgerät mit zwei drehbar gelagerten Werkzeugen (8, 9), wobei das erste Werkzeug (8) über ein erstes Koppelgetriebe (42) antreibbar ist und wobei das zweite Werkzeug (9) über ein zweites Koppelgetriebe (43) antreibbar ist, wobei die Werkzeuge (8, 9) über die Koppelgetriebe (42, 43) um eine gemeinsame Drehachse (10) gegensinnig hin- und herdrehend antreibbar sind, wobei das erste Koppelgetriebe (42) ein erstes Antriebsglied (22) und ein erstes Koppelglied (18) umfasst und wobei das zweite Koppelgetriebe (43) ein zweites Antriebsglied (23) und ein zweites Koppelglied (19) umfasst, wobei das erste Antriebsglied (22) und das zweite Antriebsglied (23) um eine gemeinsame Koppeltriebachse (21) rotierend gelagert sind, wobei das erste Antriebsglied (22) mit dem ersten Koppelglied (18) um eine erste Gelenkachse (34) schwenkbar gekoppelt ist und wobei das erste Koppelglied (18) mit dem ersten Werkzeug (8) um eine zweite Gelenkachse (28) schwenkbar gekoppelt ist, wobei das zweite Antriebsglied (23) mit dem zweiten Koppelglied (19) um eine dritte Gelenkachse (35) schwenkbar gekoppelt ist und wobei das zweite Koppelglied (19) mit dem zweiten Werkzeug (9) um eine vierte Gelenkachse (29) schwenkbar gekoppelt ist, wobei das erste Antriebsglied (22) eine erste Antriebsgliedachse (40) aufweist, die die Koppeltriebachse (21) mit der ersten Gelenkachse (34) verbindet und wobei das zweite Antriebsglied (23) eine zweite Antriebsgliedachse (41) aufweist, die die Koppeltriebachse (21) mit der dritten Gelenkachse (35) verbindet, wobei der Winkel (β) zwischen der ersten Antriebsgliedachse (40) und der zweiten Antriebsgliedachse (41) größer als 0° ist und wobei die Drehachse (10) der Werkzeuge (8, 9) und die Koppeltriebachse (21) eine Mittelebene (30) aufspannen,
**dadurch gekennzeichnet, dass** die Mittelebene (30) zwischen der zweiten Gelenkachse (28) und der vierten Gelenkachse (29) verläuft.

2. Werkzeugkopf nach Anspruch 1,
**dadurch gekennzeichnet, dass** der Winkel (β) zwischen der ersten Antriebsgliedachse (40) und der zweiten Antriebsgliedachse (41) kleiner als 180° ist.

3. Werkzeugkopf nach Anspruch 1 oder 2,
**dadurch gekennzeichnet, dass** das erste Koppelglied (18) eine erste Koppelgliedachse (48) aufweist, die die erste Gelenkachse (34) mit der zweiten Gelenkachse (28) verbindet und dass das zweite Koppelglied (19) eine zweite Koppelgliedachse (49) aufweist, die die dritte Gelenkachse (35) mit der vierten Gelenkachse (29) verbindet und dass die beiden Koppelgetriebe (42, 43) so angeordnet sind, dass ein erster Antriebswinkel (ε) zwischen der ersten Antriebsgliedachse (40) und der ersten Koppelgliedachse (48) und ein zweiter Antriebswinkel (ϕ) zwischen der zweiten Antriebsgliedachse (41) und der zweiten Koppelgliedachse (49) für jede Stellung der Koppelgetriebe (42, 43) gleich ist.

4. Werkzeugkopf nach einem der Ansprüche 1 bis 3,
**dadurch gekennzeichnet, dass** der Werkzeugkopf (51) ein Getriebe (33) mit einem Antriebsritzel (26) und einem Tellerrad (31) aufweist, wobei das Tellerrad (31) drehfest mit den Antriebsgliedern (22, 23) der Koppelgetriebe (42, 43) verbunden ist.

5. Werkzeugkopf nach Anspruch 4,
**dadurch gekennzeichnet, dass** der Radius (r) des Tellerrads (31) mindestens das 3,5fache des Abstands (b) der ersten Gelenkachse (34) zur Koppeltriebachse (21) beträgt.

6. Werkzeugkopf nach Anspruch 4 oder 5,
**dadurch gekennzeichnet, dass** mindestens ein Abschnitt des Tellerrads (31) zwischen den Antriebsgliedern (22, 23) und den Werkzeugen (8, 9) angeordnet ist.

7. Werkzeugkopf nach einem der Ansprüche 4 bis 6,
**dadurch gekennzeichnet, dass** das Antriebsritzel (26) mit dem Tellerrad (31) kämmt und dass das Antriebsritzel (26) eine Anschlusskontur (50) zur drehfesten Verbindung mit einer Antriebswelle (5) eines Arbeitsgeräts (1) aufweist.

8. Werkzeugkopf nach einem der Ansprüche 1 bis 7,
**dadurch gekennzeichnet, dass** mindestens ein Koppelglied (18, 19) über ein Abtriebsglied (14, 15) mit dem zugeordneten Werkzeug (8, 9) gekoppelt ist, wobei das Abtriebsglied (14, 15) drehfest mit dem zugeordneten Werkzeug (8, 9) verbunden ist.

9. Werkzeugkopf nach Anspruch 8,
**dadurch gekennzeichnet, dass** das mindestens eine Abtriebsglied (14, 15) um weniger als 360° um die Drehachse (10) schwenkbar ist.

10. Werkzeugkopf nach einem der Ansprüche 1 bis 9,
**dadurch gekennzeichnet, dass** das erste Werkzeug (8) an einer Hülse (16) fixiert ist und dass das zweite Werkzeug (9) an einer Welle (17) fixiert ist, die durch die Hülse (16) ragt.

11. Werkzeugkopf nach einem der Ansprüche 1 bis 10,
**dadurch gekennzeichnet, dass** mindestens ein Werkzeug (8, 9) mindestens eine Schneidkante (44, 45, 46, 47) aufweist, die bei jeder Bewegung in einer Richtung zwei Gegenkanten des anderen Werkzeugs (8, 9) überstreicht.

12. Arbeitsgerät mit einem Antriebsmotor (3), mit einer Antriebswelle (5) und mit einem Werkzeugkopf (51) nach einem der Ansprüche 1 bis 11, wobei die Antriebswelle (5) mit einem Antriebsritzel (26) des Werkzeugkopfs (51) drehfest verbunden ist.

13. Arbeitsgerät nach Anspruch 12,
**dadurch gekennzeichnet, dass** das Antriebsritzel (26) im Betrieb mit einer Drehzahl von mindestens 5.000 Umdrehungen pro Minute angetrieben ist.

14. Arbeitsgerät nach Anspruch 13,
**dadurch gekennzeichnet, dass** der Antriebsmotor (3) eine Motorabtriebswelle (52) aufweist und dass die Drehzahl der Motorabtriebswelle (52) und die Drehzahl des Antriebritzel (26) bei angetriebenen Werkzeugen (8, 9) gleich sind.

## Claims

1. Tool head for a hand-held implement with two rotatably mounted tools (8, 9), it being possible for the first tool (8) to be driven via a first coupler mechanism (42), and it being possible for the second tool (9) to be driven via a second coupler mechanism (43), it being possible for the tools (8, 9) to be driven via the coupling mechanisms (42, 43) in opposite directions so as to rotate to and fro about a common rotational axis (10), the first coupler mechanism (42) comprising a first drive member (22) and a first coupler member (18), and the second coupler mechanism (43) comprising a second drive member (23) and a second coupler member (19), the first drive member (22) and the second drive member (23) being mounted such that they can rotate about a common coupler drive axis (21), the first drive member (22) being coupled to the first coupler member (18) such that it can be pivoted about a first joint axis (34), and the first coupler member (18) being coupled to the first tool (8) such that it can be pivoted about a second joint axis (28), the second drive member (23) being coupled to the second coupler member (19) such that it can be pivoted about a third joint axis (35), and the second coupler member (19) being coupled to the second tool (9) such that it can be pivoted about a fourth joint axis (29), the first drive member (22) having a first drive member axis (40) which connects the coupler drive axis (21) to the first joint axis (34), and the second drive member (23) having a second drive member axis (41) which connects the coupler drive axis (21) to the third joint axis (35), the angle (β) between the first drive member axis (40) and the second drive member axis (41) being greater than 0°, and the rotational axis (10) of the tools (8, 9) and the coupler drive axis (21) defining a centre plane (30),
**characterized in that** the centre plane (30) runs between the second joint axis (28) and the fourth joint axis (29).

2. Tool head according to Claim 1,
**characterized in that** the angle (β) between the first drive member axis (40) and the second drive member axis (41) is smaller than 180°.

3. Tool head according to Claim 1 or 2,
**characterized in that** the first coupler member (18) has a first coupler member axis (48) which connects the first joint axis (34) to the second joint axis (28), and **in that** the second coupler member (19) has a second coupler member axis (49) which connects the third joint axis (35) to the fourth joint axis (29), and **in that** the two coupler mechanisms (42, 43) are arranged in such a way that a first drive angle (ε) between the first drive member axis (40) and the first coupler member axis (48) and a second drive angle (ϕ) between the second drive member axis (41) and the second coupler member axis (49) are identical for every position of the coupler mechanisms (42, 43).

4. Tool head according to one of Claims 1 to 3,
**characterized in that** the tool head (51) has a gear mechanism (33) with a drive pinion (26) and a ring gear (31), the ring gear (31) being coupled fixedly to the drive members (22, 23) of the coupler mechanisms (42, 43) for conjoint rotation.

5. Tool head according to Claim 4,
**characterized in that** the radius (r) of the ring gear (31) is at least 3.5 times the spacing (b) of the first joint axis (34) from the coupler drive axis (21).

6. Tool head according to Claim 4 or 5,
**characterized in that** at least one portion of the ring gear (31) is arranged between the drive members (22, 23) and the tools (8, 9).

7. Tool head according to one of Claims 4 to 6,
**characterized in that** the drive pinion (26) meshes with the ring gear (31), and **in that** the drive pinion (26) has a connection contour (50) for fixed connection to a drive shaft (5) of an implement (1) for conjoint rotation.

8. Tool head according to one of Claims 1 to 7,
**characterized in that** at least one coupler member (18, 19) is coupled via an output member (14, 15) to the associated tool (8, 9), the output member (14, 15) being connected fixedly to the associated tool (8, 9) for conjoint rotation.

9. Tool head according to Claim 8,
**characterized in that** the at least one output member (14, 15) can be pivoted about a rotational axis (10) by less than 360°.

10. Tool head according to one of Claims 1 to 9,
**characterized in that** the first tool (8) is fixed on a sleeve (16), and **in that** the second tool (9) is fixed on a shaft (17) which protrudes through the sleeve (16).

11. Tool head according to one of Claims 1 to 10,
**characterized in that** at least one tool (8, 9) has at least one cutting edge (44, 45, 46, 47) which sweeps over two opposing edges of the other tool (8, 9) during its movement in one direction.

12. Implement with a drive motor (3), with a drive shaft (5) and with a tool head (51) according to one of Claims 1 to 11, the drive shaft (5) being connected fixedly to a drive pinion (26) of the tool head (51) for conjoint rotation.

13. Implement according to Claim 12,
**characterized in that** the drive pinion (26) is driven during operation with a rotational speed of at least 5000 revolutions per minute.

14. Implement according to Claim 13,
**characterized in that** the drive motor (3) has a motor output shaft (52), and **in that** the rotational speed of the motor output shaft (52) and the rotational speed of the drive pinion (26) are identical in the case of driven tools (8, 9).

## Revendications

1. Tête d'outil pour un appareil de travail portatif, comprenant deux outils (8, 9) montés rotatifs, dans laquelle le premier outil (8) peut être entraîné par l'intermédiaire d'un premier engrenage de couplage (42), et dans laquelle le deuxième outil (9) peut être entraîné par l'intermédiaire d'un deuxième engrenage de couplage (43), dans laquelle les outils (8, 9) peuvent être entraînés par l'intermédiaire des engrenages de couplage (42, 43) en tournant en alternance dans les deux sens autour d'un axe de rotation commun (10), dans laquelle le premier engrenage de couplage (42) comprend un premier organe d'entraînement (22) et un premier organe de couplage (18), et dans laquelle le deuxième engrenage de couplage (43) comprend un deuxième organe d'entraînement (23) et un deuxième organe de couplage (19), dans laquelle le premier organe d'entraînement (22) et le deuxième organe d'entraînement (23) sont montés en rotation autour d'un axe d'entraînement de couplage commun (21), dans laquelle le premier organe d'entraînement (22) est couplé au premier organe de couplage (18) en pivotement autour d'un premier axe d'articulation (34), et dans laquelle le premier organe de couplage (18) est couplé au premier outil (8) en pivotement autour d'un deuxième axe d'articulation (28), dans laquelle le deuxième organe d'entraînement (23) est couplé au deuxième organe de couplage (19) en pivotement autour d'un troisième axe d'articulation (35), et dans laquelle le deuxième organe de couplage (19) est couplé au deuxième outil (9) en pivotement autour d'un quatrième axe d'articulation (29), dans laquelle le premier organe d'entraînement (22) présente un premier axe d'organe d'entraînement (40) qui relie l'axe d'entraînement de couplage (21) au premier axe d'articulation (34), et dans laquelle le deuxième organe d'entraînement (23) présente un deuxième axe d'organe d'entraînement (41) qui relie l'axe d'entraînement de couplage (21) au troisième axe d'articulation (35), dans laquelle l'angle (β) entre le premier axe d'organe d'entraînement (40) et le deuxième axe d'organe d'entraînement (41) est supérieur à 0°, et dans laquelle l'axe de rotation (10) des outils (8, 9) et l'axe d'engrenage de couplage (21) définissent un plan médian (30),
**caractérisée en ce que** le plan médian (30) s'étend entre le deuxième axe d'articulation (28) et le quatrième axe d'articulation (29).

2. Tête d'outil selon la revendication 1,
**caractérisée en ce que** l'angle (β) entre le premier axe d'organe d'entraînement (40) et le deuxième axe d'organe d'entraînement (41) est inférieur à 180°.

3. Tête d'outil selon la revendication 1 ou 2,
**caractérisée en ce que** le premier organe de couplage (18) présente un premier axe d'organe de couplage (48) qui relie le premier axe d'articulation (34) au deuxième axe d'articulation (28), et **en ce que** le deuxième organe de couplage (19) présente un deuxième axe d'organe de couplage (49) qui relie le troisième axe d'articulation (35) au quatrième axe d'articulation (29), et **en ce que** les deux engrenages de couplage (42, 43) sont agencés de telle sorte qu'un premier angle d'entraînement (ε) entre le premier axe d'organe d'entraînement (40) et le premier axe d'organe de couplage (48) et un deuxième angle d'entraînement (ϕ) entre le deuxième axe d'organe d'entraînement (41) et le deuxième axe d'organe de couplage (49) est identique pour chaque position de l'engrenage de couplage (42, 43).

4. Tête d'outil selon l'une quelconque des revendications 1 à 3,
**caractérisée en ce que** la tête d'outil (51) présente un mécanisme (33) pourvu d'un pignon d'entraînement (26) et d'une couronne dentée (31), dans laquelle la couronne dentée (31) est reliée de manière solidaire en rotation aux organes d'entraînement (22, 23) de l'engrenage de couplage (42, 43).

5. Tête d'outil selon la revendication 4,
**caractérisée en ce que** le rayon (r) de la couronne dentée (31) mesure au moins 3,5 fois la distance (b) entre le premier axe d'articulation (34) et l'axe d'entraînement de couplage (21).

6. Tête d'outil selon la revendication 4 ou 5,
**caractérisée en ce qu'**au moins une partie de la couronne dentée (31) est disposée entre les organes d'entraînement (22, 23) et les outils (8, 9).

7. Tête d'outil selon l'une quelconque des revendications 4 à 6,
**caractérisée en ce que** le pignon d'entraînement (26) est en prise avec la couronne dentée (31), et **en ce que** le pignon d'entraînement (26) présente un contour de raccordement (50) pour la connexion solidaire en rotation à un arbre d'entraînement (5) d'un appareil de travail (1).

8. Tête d'outil selon l'une quelconque des revendications 1 à 7,
**caractérisée en ce qu'**au moins un organe de couplage (18, 19) est couplé à l'outil (8, 9) associé par l'intermédiaire d'un organe entraîné (14, 15), dans laquelle l'organe entraîné (14, 15) est relié de manière solidaire en rotation à l'outil (8, 9) associé.

9. Tête d'outil selon la revendication 8,
**caractérisée en ce que** ledit au moins un organe entraîné (14, 15) est pivotant sur moins de 360° autour de l'axe de rotation (10).

10. Tête d'outil selon l'une quelconque des revendications 1 à 9,
**caractérisée en ce que** le premier outil (8) est fixé à une douille (16), et **en ce que** le deuxième outil (9) est fixé à un arbre (17) qui fait saillie à travers la douille (16).

11. Tête d'outil selon l'une quelconque des revendications 1 à 10,
**caractérisée en ce qu'**au moins un outil (8, 9) présente au moins un bord coupant (44, 45, 46, 47) qui balaie à chaque mouvement dans une direction deux bords complémentaires de l'autre outil (8, 9).

12. Appareil de travail pourvu d'un moteur d'entraînement (3),
comprenant un arbre d'entraînement (5) et une tête d'outil (51) selon l'une quelconque des revendications 1 à 11, dans lequel l'arbre d'entraînement (5) est relié de manière solidaire en rotation à un pignon d'entraînement (26) de la tête d'outil (51).

13. Appareil de travail selon la revendication 12,
**caractérisé en ce qu'**en cours de fonctionnement, le pignon d'entraînement (26) est entraîné à une vitesse de rotation d'au moins 5000 tours par minute.

14. Appareil de travail selon la revendication 13,
**caractérisé en ce que** le moteur d'entraînement (3) présente un arbre entraîné de moteur (52), et **en ce que** la vitesse de rotation de l'arbre entraîné de moteur (52) et la vitesse de rotation du pignon d'entraînement (26) sont identiques lorsque les outils (8, 9) sont entraînés.
